(19) Europäisches Patentamt
European Patent Office
Office européen des brevets

(11) **EP 4 451 016 A1**

(12) **EUROPEAN PATENT APPLICATION**

(43) Date of publication:
**23.10.2024   Bulletin 2024/43**

(21) Application number: **23169046.2**

(22) Date of filing: **20.04.2023**

(51) International Patent Classification (IPC):
**G01S 19/42** (2010.01)   **G01S 19/49** (2010.01)
**G01S 19/53** (2010.01)   **G01C 21/16** (2006.01)
**G01S 19/50** (2010.01)   **G01S 19/14** (2010.01)

(52) Cooperative Patent Classification (CPC):
**G01S 19/42; G01C 21/188; G01S 19/49;**
**G01S 19/53;** G01S 19/14; G01S 19/50

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Valeo Comfort and Driving Assistance**
**94000 Créteil (FR)**

(72) Inventors:
• **RADWAN, Mohamed**
  **94000 Créteil (FR)**
• **ELGENDY, Ahmed**
  **94000 Créteil (FR)**
• **FAWZY, Haytham**
  **94000 Créteil (FR)**

(74) Representative: **Delplanque, Arnaud**
**Valeo Comfort and Driving Assistance**
**6 rue Daniel Costantini**
**94000 Créteil (FR)**

(54)   **DETERMINATION OF THE ALTITUDE OF A MOVING VEHICLE**

(57)   The disclosure notably relates to for determination of the altitude of a moving vehicle based on GNSS data and vehicle sensor data. The method comprises, in real-time obtaining a sensor vehicle pitch rate stemming from at least one vehicle sensor. The method also comprises, in real-time, while the GNSS signal is available, obtaining a GNSS vehicle pitch rate that stems from GNSS data of an altitude of the vehicle. The method also comprises, in real-time, calibrating the sensor vehicle pitch rate based on the GNSS vehicle pitch rate, the calibration being based on formulating the GNSS vehicle pitch rate as an affine function of the sensor vehicle pitch rate.

FIG. 1

Processed by Luminess, 75001 PARIS (FR)

**Description**

**TECHNICAL FIELD**

The disclosure relates to the field of computer programs and systems, and more specifically to a method, system and program for determination of the altitude of a moving vehicle.

**BACKGROUND**

A number of systems and programs are offered on the market for the estimation of the altitude in vehicles, for a number of contexts and applications, such as telematic emergency calls and/or allocation of service providers.
Within this context, there is still a need for an improved method for determination of the altitude of a moving vehicle.

**SUMMARY**

It is therefore provided a computer-implemented method for determination of the altitude of a moving vehicle based on GNSS data and vehicle sensor data. The method comprises, in real-time, obtaining a sensor vehicle pitch rate. The sensor vehicle pitch rate stems from at least one vehicle sensor. The method also comprises, in real-time, obtaining, while the GNSS signal is available, a GNSS vehicle pitch rate. The GNSS vehicle pitch rate stems from GNSS data of an altitude of the vehicle. The method also comprises, in real time, calibrating the sensor vehicle pitch rate based on the GNSS vehicle pitch rate. The calibration is based on formulating the GNSS vehicle pitch rate as an affine function of the sensor vehicle pitch rate.
The method may comprise one or more of the following:

- the calibration is based on the equation:

$$Pitch_{Rate_{GNSS}} = a \times Pitch_{Rate_{IMU}} + b,$$

where $Pitch_{Rate_{GNSS}}$ is the GNSS vehicle pitch rate, $Pitch_{Rate_{IMU}}$ is the sensor vehicle pitch rate, $a$ is a scaling correction, and $b$ is an offset correction;
- calibrating the sensor vehicle pitch rate comprises computing the scaling correction $a$ and the offset correction $b$;
- the computation of the scaling correction $a$ and the offset correction $b$ is based on the following equations:

$$a = \frac{Pitch_{Rate_{GNSS}}(t) - Pitch_{Rate_{GNSS}}(t-1)}{Pitch_{Rate_{IMU}}(t) - Pitch_{Rate_{IMU}}(t-1)},$$

$$b = Pitch_{Rate_{GNSS}}(t)$$
$$- \left[ \frac{Pitch_{Rate_{GNSS}}(t) - Pitch_{Rate_{GNSS}}(t-1)}{Pitch_{Rate_{IMU}}(t) - Pitch_{Rate_{IMU}}(t-1)} \right]$$
$$\times Pitch_{Rate_{IMU}}(t),$$

where $t$ is a current time step and $t$ - 1 a previous time step;
- the at least one vehicle sensor comprises an Inertial Measurement Unit (IMU);
- the method further comprises:

   ◦ when the GNSS signal is lost, determining an altitude of the vehicle using the last vehicle altitude obtained from the GNSS data and the calibrated sensor pitch rate;

- the GNSS data stems from a GNSS device that comprises only one antenna; and/or
- the vehicle is a motorbike, a car, a bus or a truck.

It is further provided a computer program comprising instructions which, when executed by a computer system, cause the system to perform the method.

It is further provided a computer readable storage medium having recorded thereon the computer program.

It is further provided a system comprising a processor coupled to a memory, the memory having recorded thereon the computer program.

The system may comprise one or more of the following:

- the system is coupled with or further comprises the GNSS and the at least one vehicle sensor; and/or
- the at least one vehicle sensor includes an Inertial Measurement Unit (IMU).

It is further provided a vehicle equipped with the system.

## BRIEF DESCRIPTION OF THE DRAWINGS

Non-limiting examples will now be described in reference to the accompanying drawings, where:

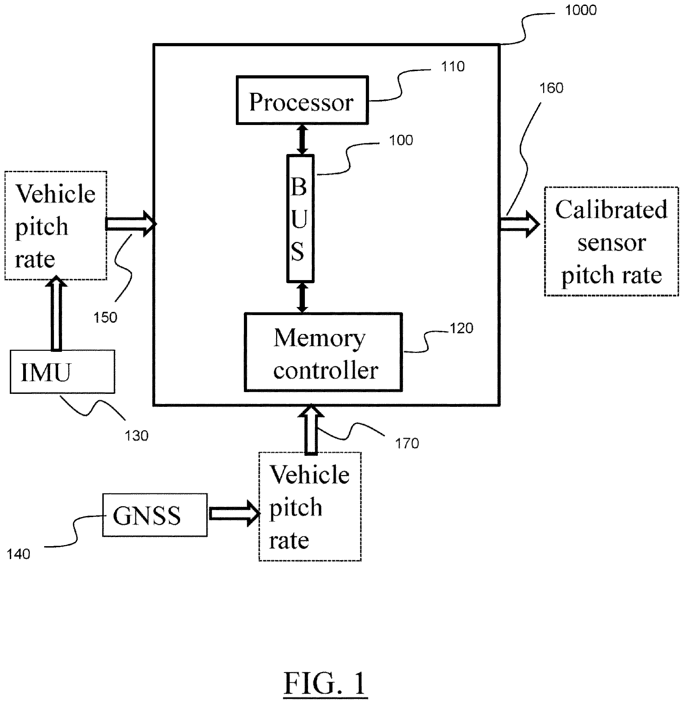

- FIG. 1 shows an example of the system; and
- FIG.s 2 to 10 illustrate the method.

## DETAILED DESCRIPTION

It is proposed a computer-implemented method for determination of the altitude of a moving vehicle based on GNSS data and vehicle sensor data. The method comprises, in real-time, obtaining a sensor vehicle pitch rate. The sensor vehicle pitch rate stems from at least one vehicle sensor. The method also comprises, in real-time, obtaining, while the GNSS signal is available, a GNSS vehicle pitch rate. The GNSS vehicle pitch rate stems from GNSS data of an altitude of the vehicle. The method also comprises, in real-time, calibrating the sensor vehicle pitch rate based on the GNSS vehicle pitch rate. The calibration is based on formulating the GNSS vehicle pitch rate as an affine function of the sensor vehicle pitch rate.

Such a method improves the determination of the altitude of the moving vehicle. Indeed, the at least one vehicle sensor may be subject to offset errors and/or scaling errors, for example due to the effects of variation in temperature and/or pressure and other mounting errors. As the method obtains the GNSS vehicle pitch rate while the GNSS signal is available (for example when the vehicle is in an open area where such GNSS signal is available), the accuracy of the sensor vehicle pitch rate is improved thanks to the calibration. In addition, as the calibration is based on formulating the GNSS vehicle pitch rate as an affine function of the sensor vehicle pitch rate, this allows to incorporate a correction to the scaling error and/or offset errors efficiently. Moreover, as the obtention is performed in real-time, the calibration is performed relatively continuously (*e.g.* continuously while the GNSS signal is available, *e.g.* at regular and short time intervals/steps). Thus the sensor vehicle pitch rate is persistently calibrated, thereby achieving the best possible performance (in terms of accuracy of the sensor vehicle pitch rate that stems from the sensor) even when the GNSS data is no longer available (for example when the vehicle is in a covered area such as a tunnel). In other words, upon losing the GNSS data, the calibrated sensor vehicle pitch rate, which is conform to the last available GNSS data, makes on its own accurate prediction/calculation of the pitch rate during the absence of the GNSS data.

The method is computer-implemented. This means that steps (or substantially all the steps) of the method are executed by at least one computer, or any system alike, for example any computer or any system mounted on a vehicle. Thus, steps of the method are performed by the computer, possibly fully automatically (for example in real-time), or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory, the memory having recorded thereon a computer program comprising instructions for performing the method. The memory is any hardware adapted for such storage, possibly comprising several physical distinct parts (e.g. one for the program). The computer system may also comprise a communication interface configured for obtaining the sensor vehicle pitch rate or the GNSS vehicle pitch rate. The processor may be configured for detecting when the GNSS signal is available. The system may be configured to be mounted to the moving vehicle, for example being affixed to the vehicle or alternatively being configured to be removed from the vehicle.

The system may be coupled with or further comprise the GNSS (that is, the vehicle GNSS hardware, including suitable satellite communication means (*e.g.* at least one GNSS antenna, *e.g.* a single GNSS antenna)) and the at least one vehicle sensor. The at least one vehicle sensor may include an Inertial Measurement Unit (IMU). The system may be any internal computer system of the vehicle.

It is further provided a vehicle equipped with the system. The vehicle may be vehicle a motorbike, a car, a bus or a truck.

FIG. 1 shows an example of the system, wherein the system is a computer system 1000 configured to be mounted on a vehicle.

The computer 1000 of the example comprises a processor or processing unit such as a central processing unit (CPU) 110 connected to an internal communication BUS 100. A random access memory (RAM) may be optionally connected to the BUS (not shown). A memory controller 120 manages accesses to a mass memory device, such as hard drive or other form of non-volatile memory such as such as EPROM, EEPROM, and flash memory devices. Any of the foregoing may be supplemented by, or incorporated in, specially designed ASICs (application-specific integrated circuits). The computer 1000 may optionally also include a display, e.g., a touch screen (not shown). The display may be configured for displaying the altitude of the vehicle. The computer may be coupled to a GNSS 140 through a port or interface 170 and with at least one sensor such as an IMU 130 through a port or interface 150. The computer may comprise an output port or interface 160 for outputting the calibrated sensor pitch rate.

The computer program may comprise instructions executable by a computer, the instructions comprising means for causing the system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

The method is for determining the altitude of the moving vehicle. The altitude of the moving vehicle may be the height over either the Earth sea level (for example, as the vehicle is moving) or its virtual ellipsoid contour for its ground surface. The altitude may be expressed in terms of cartesian coordinates (x,y,z), with z denoting (by convention) the altitude with respect to the x-y plane. The method is for determining the altitude of the moving vehicle. This means that the output of the method allows determination of the altitude of the moving vehicle. In fact, the output of the method comprises the calibrated sensor vehicle pitch rate, which allows determination of the vehicle pitch rate (*e.g.* together with the GNSS signal when available), which in turn allows determination of the altitude. The method may also comprise, based on the pitch rate, calculating and outputting the altitude and/or the pitch angle as discussed herein below.

For that, steps of the method are performed in real-time. In other words, steps of the method may be continuously repeated for relatively short time intervals (for example in the order of milliseconds) so that the duration of the steps is low enough so as to appear continuous (within a discrete approximation) for the end user. The sensor vehicle pitch rate stems from at least one vehicle sensor in real time, that is, as a sequence of discrete values corresponding to regular time steps separated by short time periods. For example, the method may comprise processing a signal coming from the sensor and capturing the sensor pitch rate, including discretizing/sampling values of the sensor vehicle pitch rate with time-stamps indicative of the time-order between each discretized value. In other words, the sensor vehicle pitch rate may be a time-ordered sequence of values, each value comprising a pitch rate value acquired by the at least one vehicle sensor at a given time step. Each value may be associated with a time-stamp. The time-stamp may be a piece of data comprising a value of time, e.g., a time in which the pitch rate is acquired by the sensor. In examples, two values of the sensor vehicle pitch rate may be separated by the time-difference consisting of the difference between the respective values of time comprised in the respective time-stamps. In any case, the values of the sensor vehicle pitch rate may be separated by a uniform time-difference between each other (for instance two consecutive values) or alternatively, by a nonuniform time-difference. Real-time obtention of the sensor vehicle pitch rate through acquisition of the sensor pitch rate signal and appropriate processing of this signal is known in the art.

The sensor vehicle pitch rate is vehicle sensor data stemming from the at least one vehicle sensor. The at least one vehicle sensor may measure mechanical motions of the vehicle, for example the pitch motion changes of the vehicle (that is, the up or down movement of the vehicle), the speed of the vehicle, driven distance, and/or angle changes (for example with respect to cartesian coordinates) of the vehicle to determine the sensor vehicle pitch rate. The at least one vehicle sensor may transmit an electrical signal proportional to the pitch motion of the vehicle. In other words, the sensor vehicle pitch rate may stem from an electrical signal acquired by the sensor and transmitted to the computer system/processing unit performing the method. The at least one vehicle sensor may include an Inertial Measurement Unit (IMU). The at least one vehicle sensor may also include a gyroscope.

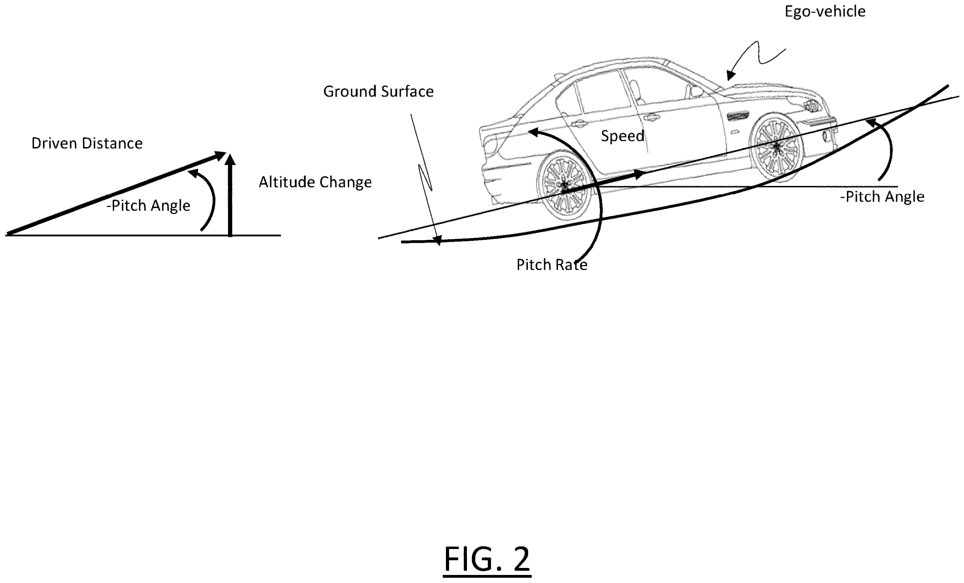

FIG. 2 illustrates an example of the vehicle elevating up an inclined road. Such elevation leads to a negative pitching rate as the vehicle rotates clockwise around the lateral axis towards the left of the vehicle (Y-axis in standard coordinates). The pitch rate is the rate of change of the pitching angle relative to the lateral Y-axis of the vehicle.

The method may compute the sensor (IMU) pitching angle of the moving vehicle by integrating the pitch rate signal stemming from the IMU. In such examples, the sensor vehicle pitch rate may be the rate of change of the pitching angle relative to the lateral Y-axis of the moving vehicle (in cartesian coordinates). In these examples, the pitching angle may be computed as a current pitch angle as follows: *Pitch_Angle* (*Current Time Stamp*) = *Pitch_Angle* (*Prev_Time_Stamp*) + *Pitch_Rate* × *Delta_Time,* where *Pitch_Angle* (*Prev_Time_Stamp*) is the pitch angle at a previous time-stamp, *Pitch_Rate* is the pitching rate at the current time-stamp and *Delta_Time* is the time step (difference of time between time-stamps) between two successive *Pitch_Rate* values.

Examples for determining the altitude using the computed pitch angle are now discussed. The change in altitude in the moving vehicle corresponds to the projection of the driven distance of the moving vehicle in the vertical direction (with respect to ground). On one side, positive pitching corresponds to counter-clockwise rotation of the moving vehicle's head around its lateral Y-axis, it presents the downwards motion of the moving vehicle that decreases its altitude. On the other side, negative pitching corresponds to clockwise rotation equivalent to the upwards motion of the moving vehicle that increases its altitude.

The altitude may be computed from the following formula:

$$Altitude(Current\ Time\ Stamp) = Altitude(Prev\ Time\ Stamp) - Speed \times$$

$$Delta\_Time \times \sin(Pitch\_Angle),\quad where\quad Altitude(Current\ Time\ Stamp)$$

denotes the current altitude at a current time stamp (in other words, the new successive value of the altitude computed by the method), *Altitude*(*Prev Time Stamp*) denotes the altitude at a previous time-stamp (time-ordered before the current time-stamp), *Speed* denotes the speed of the moving vehicle at the current time stamp and *Pitch_Angle* denotes the pitch angle at the current time stamp, *Delta_Time* denotes the time difference between time-steps (for example the difference between the time *Current Time Stamp* and the time *Prev Time Stamp).*

Another formulation, denoting the previous time-stamp and current time stamp with time order (*t* - 1) and (t) for a given time *t,* is as follows:

$$Altitude(t) = Altitude(t-1) - Speed(t) \times Delta\_Time \times \sin(Pitch\_Angle(t)).$$

The method obtains, while the GNSS signal is available, the GNSS vehicle pitch rate. The GNSS signal is a Global Navigation Satellite System signal, as known in the art. In other words, the GNSS data of the altitude of the vehicle is provided from the Global Navigation Satellite System. The Global Navigation Satellite System may be for example the GPS system, GLONASS or GALILEO navigation system. The GNSS signal may comprise a sequence of data packets (e.g., time-ordered) providing the pitch rate of the vehicle associated with a time-stamp. In examples, the GNSS data stems from a GNSS device that comprises only one antenna, for example a GPS device configured for receiving GPS data, the GPS system comprising only one antenna that handles the three spatial directions of the moving vehicle, such as altitude, latitude, longitude.

The GNSS vehicle pitch rate stems from GNSS data of an altitude of the vehicle. In other words, the GNSS data comprises (at least indirectly or after performing a computation thereof) the GNSS vehicle pitch rate. In examples, the method may compute the GNSS vehicle pitch rate from the GNSS signal by processing the GNSS signal in any suitable manner, for example the one which is now discussed. The GNSS vehicle pitch rate may comprise a sequence of data packets (e.g., time-ordered) providing the pitch rate of the vehicle associated with a time-stamp (for example, the same time-stamp from the GNSS signal). The GNSS signal comprises the altitude of the moving vehicle. The GNSS vehicle pitch rate may be computed by the method by implementing the following formula, based on the moving vehicle's kinematic motion:

$$\frac{Altitude_{GNSS} - Altitude_{GNSS\_Old}}{-Speed \times Delta\_Time} = \sin(Pitch)$$

where $Altitude_{GNSS}$ denotes a current value of altitude of the moving vehicle comprised in the GNSS signal, $Altitude_{GNSS\_Old}$ denotes a previous value of the altitude of the moving vehicle, *Speed* denotes the speed of the moving vehicle at the current time (that is, at the time of the current value of the altitude) and *Delta_Time* denotes the time difference between the current value of the altitude and the previous value of the altitude.

The method may comprise computing the pitch of the moving vehicle by solving the equation for the variable *Pitch* as follows:

$$Pitch = \sin^{-1}\left[\frac{Altitude_{GNSS} - Altitude_{GNSS\_old}}{-Speed \times Delta\_Time}\right]$$
$$= \sin^{-1}\left[\frac{Altitude_{GNSS\_old} - Altitude_{GNSS}}{Speed \times Delta\_Time}\right].$$

Let (t) and (t - 1) denote the current stamp-time and the previous stamp-time respectively. The pitch (denoted as $Pitch_{GNSS}(t)$) and the pitch rate (denoted as $Pitch_{Rate_{GNSS}}(t)$) stemming from the altitude of the moving vehicle comprised in the GNSS signal are related as follows:

$$Pitch_{GNSS}(t) = \sin^{-1}\left[\frac{Altitude_{GNSS}(t-1) - Altitude_{GNSS}(t)}{Speed(t) \times Delta_{Time}}\right],$$

$$Pitch_{Rate\ GNSS}(t) = \frac{Pitch_{GNSS}(t) - Pitch_{GNSS}(t-1)}{Delta\_Time}.$$

By substitution of the equation for the variable $Pitch_{GNSS}(t)$ into the equation for the variable $Pitch_{Rate_{GNSS}}(t)$, the method may estimate the pitch rate of the moving vehicle from the GNSS data at two successive time stamps (t - 1) and (t) (denoted as $Pitch_{Rate_{GNSS}}(t - 1)$ and $Pitch_{Rate_{GNSS}}(t)$) is provided by the following formula:

$$Pitch_{Rate_{GNSS}}(t)$$
$$= \frac{\sin^{-1}\left[\frac{Altitude_{GNSS}(t-1) - Altitude_{GNSS}(t)}{Speed(t) \times Delta\_Time}\right] - \sin^{-1}\left[\frac{Altitude_{GNSS}(t-2) - Altitude_{GNSS}(t-1)}{Speed(t-1) \times Delta\_Time}\right]}{Delta\_Time},$$

$$Pitch_{Rate_{GNSS}}(t-1)$$
$$= \frac{\sin^{-1}\left[\frac{Altitude_{GNSS}(t-2) - Altitude_{GNSS}(t-1)}{Speed(t-1) \times Delta\_Time}\right] - \sin^{-1}\left[\frac{Altitude_{GNSS}(t-3) - Altitude_{GNSS}(t-2)}{Speed(t-2) \times Delta\_Time}\right]}{Delta\_Time}.$$

Going back to the steps of the method, the method further comprises calibrating the sensor vehicle pitch rate based on the GNSS vehicle pitch rate. By "calibrating" it is meant that the method may estimate and/or correct the errors of the sensor vehicle pitch rate by comparing the sensor vehicle pitch rate against the GNSS vehicle pitch rate (for example, as a ratio between respective values). The method may for example estimate offset and scaling errors or correction by comparing the pitch rate values comprised in the sensor vehicle from data packets of the GNSS vehicle pitch rate, for example two successive data packets of the GNSS vehicle pitch rate. An offset error may add a constant displacement or bias to a reference value such as the sensor vehicle pitch rate. A scaling error may change the scaling of the reference value (e.g., a multiplier of such value). The method may then further comprise filtering the sensor vehicle pitch rate signal based on the estimated offset and scaling errors or correction to provide a corrected signal that compensates for the sensor-related errors.

The calibration is based on formulating the GNSS vehicle pitch rate as an affine function of the sensor vehicle pitch rate. The affine function is a composition of a linear function with a translation. The method may compare the GNSS vehicle pitch rate with values of the affine function for performing the calibration and/or may estimate parameters (scaling and offset) of the affine function. The method may send instructions to the at least one vehicle sensor so that the sensor corrects one or more sensor parameters so as to correct for the errors in the sensor vehicle pitch respect to the GNSS vehicle pitch rate once the result of the affine function is computed.

The method thus improves the determination of the altitude of the moving vehicle. Thanks to the method calibrating the sensor vehicle pitch rate based on the GNSS vehicle pitch rate (when available), the parameters of the at least one vehicle sensor may be corrected so as to obtain an accurate altitude. Hence, the calibration does not rely on any external instruments (such as radio sensors, radars, lidars or cameras) and just relies on the GNSS signal. As steps of the method are performed in real time, such calibration may be performed online, without any pre-determined calibration procedure. Such calibration is also robust as it can be implemented on a variety of moving vehicles, such as motorcycles.

Moreover, as the GNSS vehicle pitch rate is formulated as the affine function, the GNSS vehicle pitch rate is formulated to take into account changes in scaling and translation (or offset). Hence, the method allows to correct scaling errors and/or offset errors efficiently. The method may rely on the sensor vehicle pitch rate stemming from the at least one vehicle sensor whenever the moving vehicle does not have the GNSS signal available (for example, in a covered area) and calibrate it in real time while the GNSS signal is available (for example when the moving vehicle is in an open area) so as to obtain a good compromise of accuracy when the GNSS data is no longer available (for example when the vehicle is in a covered area such as a tunnel) or not accurate enough to be trusted.

The calibration may be based on the equation:

$$Pitch_{Rate_{GNSS}} = a \times Pitch_{Rate_{IMU}} + b,$$

where $Pitch_{Rate_{GNSS}}$ is the GNSS vehicle pitch rate (that is, the pitch rate stemming from the altitude of the moving vehicle comprised in the GNSS signal), $Pitch_{Rate_{IMU}}$ is the sensor vehicle pitch rate, $a$ is a scaling correction, and $b$ is an offset correction. In other words, the affine function of the sensor vehicle pitch rate $Pitch_{Rate_{IMU}}$ is the equation for $Pitch_{Rate_{GNSS}}$.

Calibrating the sensor vehicle pitch rate may comprise computing the scaling correction $a$ and the offset correction $b$.

In examples, the method may compute the scaling correction $a$ and the offset correction $b$ by implementing the following formulae.

Let ($t$) and ($t$ - 1) respectively denote a current stamp-time and a previous stamp-time. At each time step t, the method may compute a current GNSS vehicle pitch rate $Pitch_{Rate_{GNSS}}(t)$ based on the affine function as in the following formula:

$$Pitch_{Rate_{GNSS}}(t) = a \times Pitch_{Rate_{GNSS}}(t) + b$$

wherein the values of the scaling correction $a$ and the offset correction $b$ may be preset. Alternatively, the values of the scaling correction $a$ and the offset correction $b$ may have been previously corrected in a previous calibration.

The method may also compute a previous GNSS vehicle pitch rate $Pitch_{Rate_{GNSS}}(t$ - 1) based on the affine function as in the following formula:

$$Pitch_{Rate_{GNSS}}(t - 1) = a \times Pitch_{Rate_{IMU}}(t - 1) + b.$$

The method may solve for $a$ and $b$ based on the equations for $Pitch_{Rate_{GNSS}}(t)$ and $Pitch_{Rate_{GNSS}}(t$ - 1). In other words, the method computes the scaling correction $a$ according to the following formula:

$$a = \frac{Pitch_{Rate_{GNSS}}(t) - Pitch_{Rate_{GNSS}}(t - 1)}{Pitch_{Rate_{IMU}}(t) - Pitch_{Rate_{IMU}}(t - 1)}.$$

The method also computes the offset correction b according to the formula:

$$b = Pitch_{Rate_{GNSS}}(t) - \left[ \frac{Pitch_{Rate_{GNSS}}(t) - Pitch_{Rate_{GNSS}}(t - 1)}{Pitch_{Rate_{IMU}}(t) - Pitch_{Rate_{IMU}}(t - 1)} \right] \times Pitch_{Rate_{IMU}}(t).$$

Going back to steps of the method, the method may further comprise, when the GNSS signal is lost, determining (i.e., still in real-time as the vehicle is moving) an altitude of the vehicle using the last vehicle altitude obtained from the GNSS data and the calibrated sensor pitch rate. In other words, upon losing GNSS data (for instance whenever the vehicle is on an area not covered by GNSS signal such as a tunnel or interior area), the method may use the altitude of the vehicle obtained from the GNSS data at an instant of time prior to losing GNSS data and the calibration obtained (for example, the resulting scaling correction and offset correction) prior to losing the GNSS data to calibrate the sensor vehicle pitch rate. The sensor vehicle pitch rate may maintain said altitude and said calibration while the GNSS data is lost. In yet other words, the last vehicle altitude and the calibrated sensor pitch rate are used as an initial altitude and initial calibration sensor pitch rate for the at least one sensor when the GNSS signal is lost and the altitude and calibration are not modified while the GNSS data is lost. When the GNSS signal is recovered, the method may perform the calibration again as described above.

The method thus improves the robustness and reliability of the determination of the altitude as the method ensures that the at least one vehicle sensor uses the latest scaling correction and latest offset correction as initial calibration for the at least one vehicle sensor, thus maintaining the reliability of the sensor when the GNSS signal is lost or is not reliable (for example when entering an area not covered by the GNSS signal such as a tunnel).

Moreover, the claimed invention computes continuously (thanks to the computations performed by the method being in real-time) the moving vehicle's pitch angle relative to a reference Earth horizontal surface (at sea level) based on the obtained GNSS signal and driven distance of the moving vehicle obtained from the at least one vehicle sensor and calibrates the sensor vehicle pitch rate stemming from at least one vehicle sensor while said GNSS signal is available. That is, the sensor vehicle pitch rate obtained from, for example, the IMU (Inertial Measurement Unit) is calibrated according to the obtained GNSS vehicle pitch rate stemming from GNSS data. When the moving vehicle enters an uncovered area (that is, where the GNSS signal is lost), the last vehicle altitude (for example, computed, from a last pitching angle) from the GNSS data is used as the initial pitching angle of the moving vehicle. The calibrated sensor vehicle pitch rate is thus used to continually estimate the vehicle altitude while it is found in the uncovered area. When the moving vehicle is moved back to a covered area, the sensor vehicle pitch rate obtained from the IMU may be calibrated again continuously. This restores the sensor's performance against offset and/or scaling errors due to the temperature and pressure effects, beside the IMU mounting errors inside the vehicle. The calibration of the pitching data is thus ensured to be done continuously while the GNSS data is available to get the best possible performance, for example when the GNSS data is lost.

Implementations of the method are now discussed with reference to FIG.s 3 to 11.

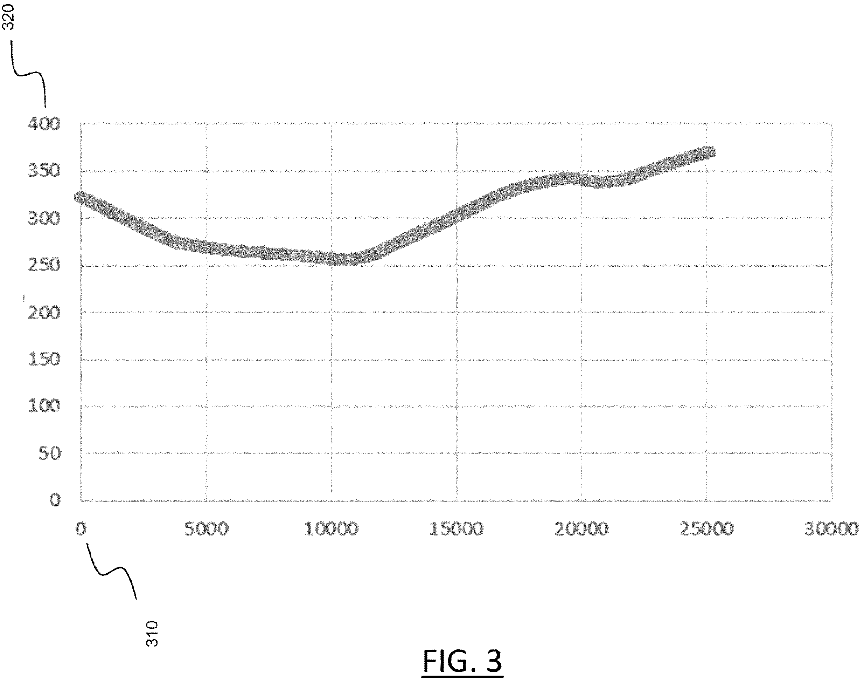

The method may record of an altitude trace for the moving vehicle's altitude obtained from GNSS signal obtained in an open-sky area while the vehicle ramps up and down on several roads. FIG. 3 shows the altitude of the vehicle obtained from GNSS signal. The axis 310 shows the distance travelled by the vehicle. The axis 320 shows the altitude in meters.

The method computes the pitching angle and pitching rate based on the obtained altitude from GNSS, the computation is based on the equations solving for $Pitch_{GNSS}(t)$ and $Pitch_{Rate_{GNSS}}(t)$ described above. Both equations (derived from the GNSS data) are considered as a reference be considered to calibrate the vehicle's pitching stemming from the vehicle's sensor so that the altitude can be accurately computed during Dead-Reckoning. The method may filter out the pitching angle computed from GNSS altitude with a low pass filter (LPF) so that the altitude is smoothed and represented. The method computes the pitching rate from the filtered pitching angle then filtered as well by LPF to be suitably represented.

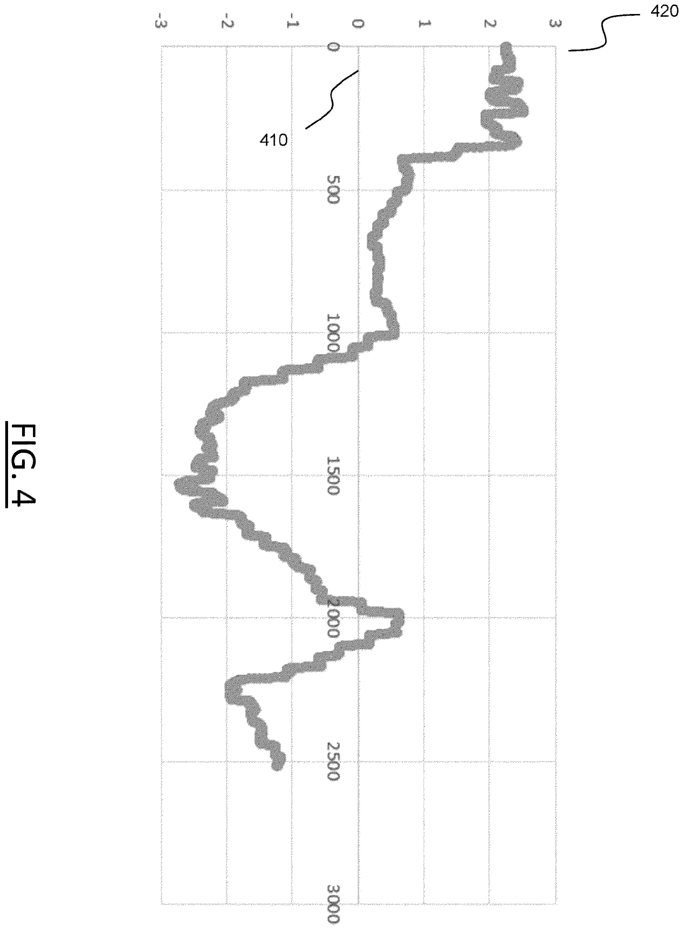

FIG.s 4 and 5 show the filtered pitching angle and pitching rate obtained from GNSS respectively. FIG. 4 shows the pitching angle computed from altitude obtained from GNSS signal based on the equation for $Pitch_{GNSS}(t)$ described above. The axis 410 shows the distance travelled by the vehicle. The axis 420 shows the pitching angle in degrees.

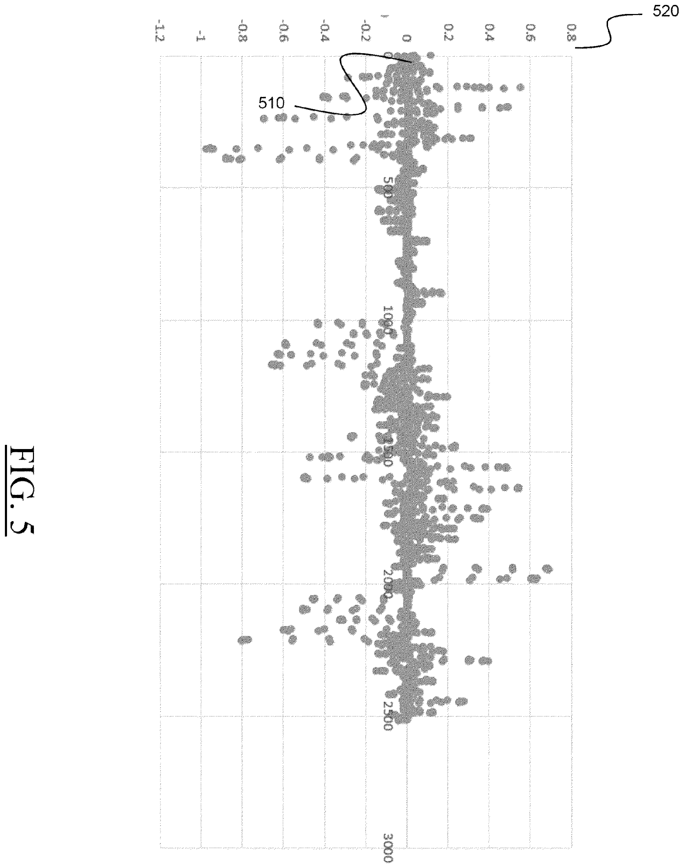

FIG. 5 shows pitching rate computed from altitude obtained from the GNSS signal in degrees per second based on the equation for $Pitch_{Rate_{GNSS}}(t)$ described above. The axis 510 shows the distance travelled by the vehicle. The axis 520 shows the pitching rate in degrees per second.

The method may also filter the pitching rate obtained from the IMU with a LPF to smooth up the signal from the sensor from noisy jumps and/or fluctuations.

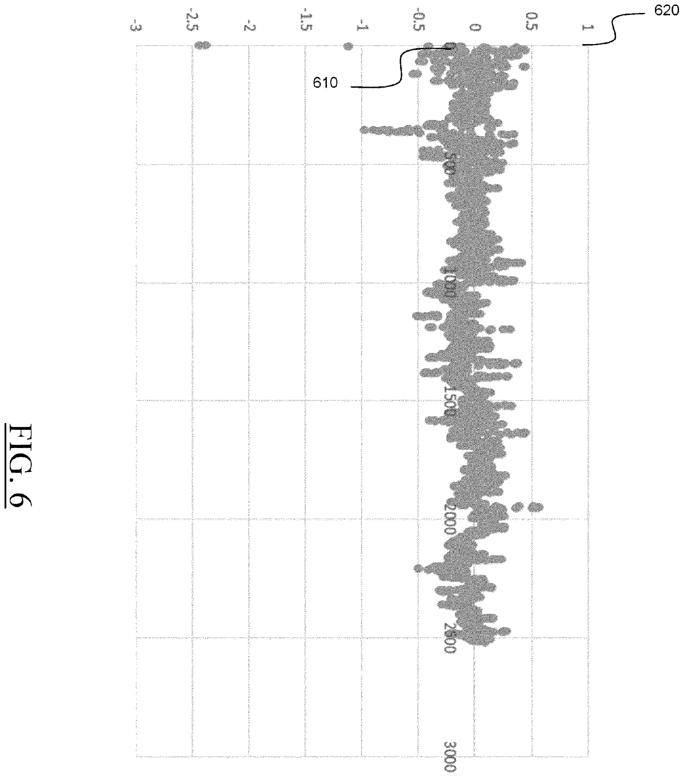

FIG. 6 shows the pitching rate from the IMU after being filtered. The axis 610 shows the distance travelled by the vehicle. The axis 620 shows the pitching rate in degrees per second.

FIG. 7 shows the pitching angle in degrees obtained by integrating the pitching rate from the IMU. The axis 710 shows the distance travelled by the vehicle. The axis 720 shows the pitching angle in degrees.

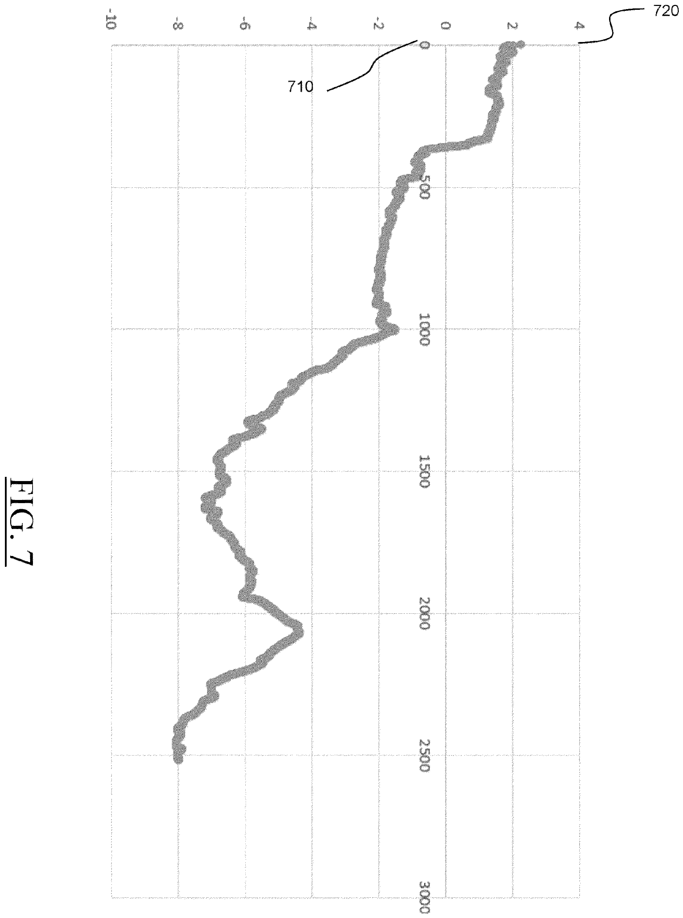

The method sets the initial value of the pitching angle (obtained by integrating the pitch rate of IMU) as an initial reference-pitching angle obtained from GNSS signal. However, as it can be seen from the deviation of the curve in FIG. 7 (having a decreasing pattern) the pitching angle obtained from IMU is not consistent with the pitching angle obtained from GNSS signal shown in FIG. 4. This illustrates that the pitch rate of IMU alone (without any correction in the calculation of the vehicle's altitude) leads to errors.

The method computes in implementations the correction factors *a* and *b* according to the equations described above. The input of both equations is based on the filtered pitch rate obtained from GNSS signal and the filtered pitch rate from IMU. The method recomputes the pitch rate based on the computed correction parameters by using the following equation:

$$Pitch_{Rate_{Corrected}}(t) = a \times Pitch_{Rate_{IMU}}(t) + b.$$

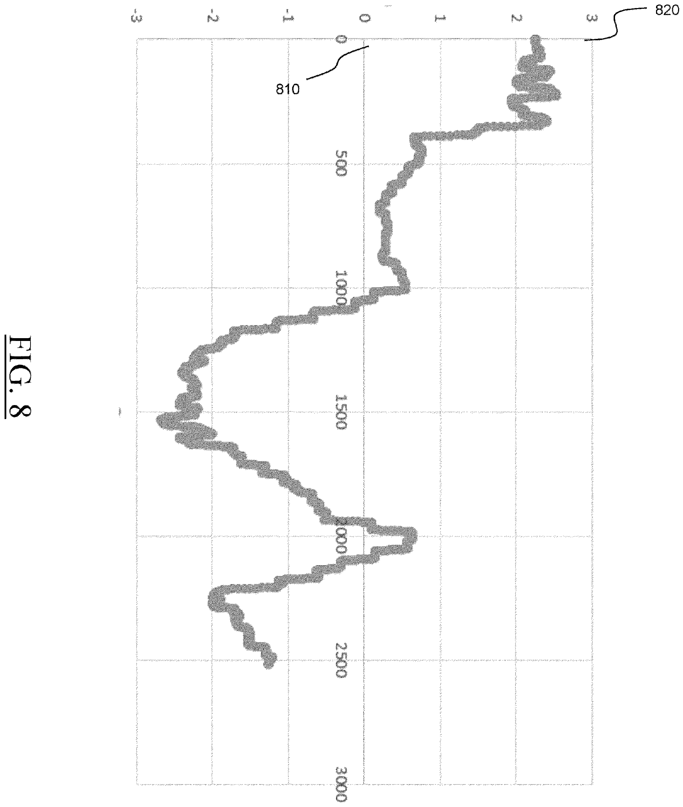

FIG. 8 illustrates the correction of the pitch rate, as the integration the corrected pitch rate from the IMU. The axis 810 shows the distance travelled by the vehicle. The axis 820 shows the corrected pitch rate in degrees. As it can be seen from FIG. 8, the pitch rate becomes closer to the reference-pitching angle from GNSS signal. Thus, the corrected pitching rate can be used in estimating the vehicle altitude accurately.

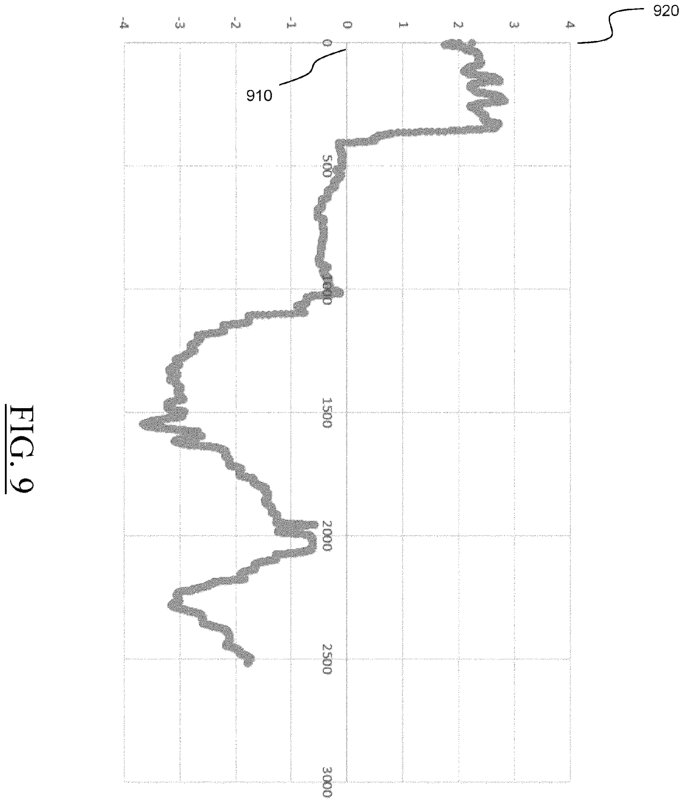

The values of the correction parameters *a* and *b* over specific period are averaged in order to validate the performance of the estimated correction parameters over periods where they are kept fixed without re-estimation. The averaged values are used as constant parameters in obtaining the corrected pitch rate based on the equation for the variable $Pitch_{Rate_{Corrected}}(t)$. FIG. 9 shows the pitch angle obtained by integrating the computed corrected pitch rate from the IMU, where the correction parameters are constant for periods of one second. The axis 910 shows the distance travelled by the vehicle. The axis 920 shows the pitch angle from the integrated corrected pitch rate in degrees. FIG. 9 illustrates that the pitch angle computed by the method still resembles the reference pitch angle from GNSS, although it is obtained based on correcting the highly corrupted pitch rate of IMU.

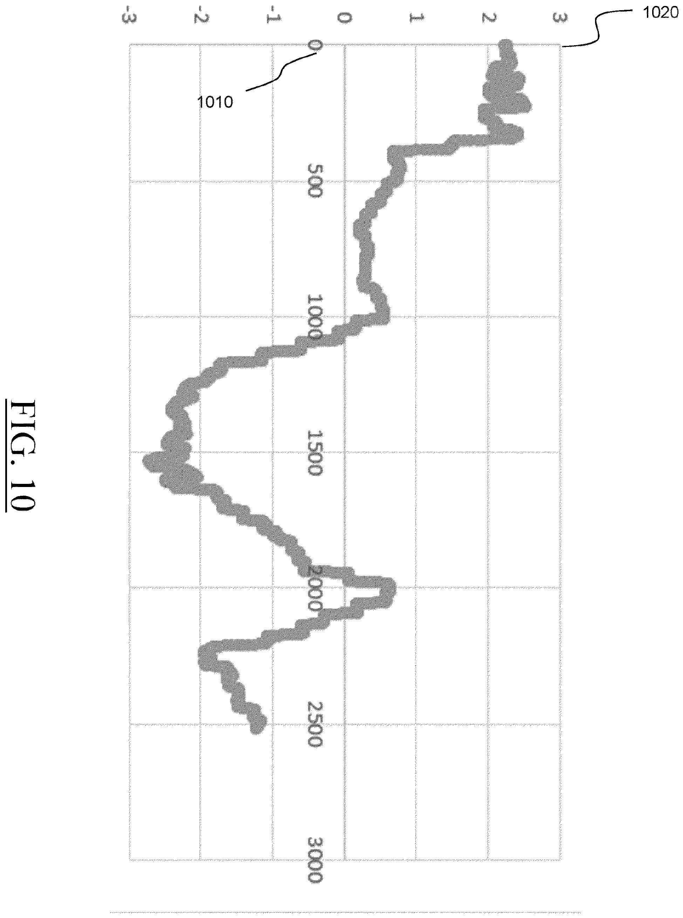

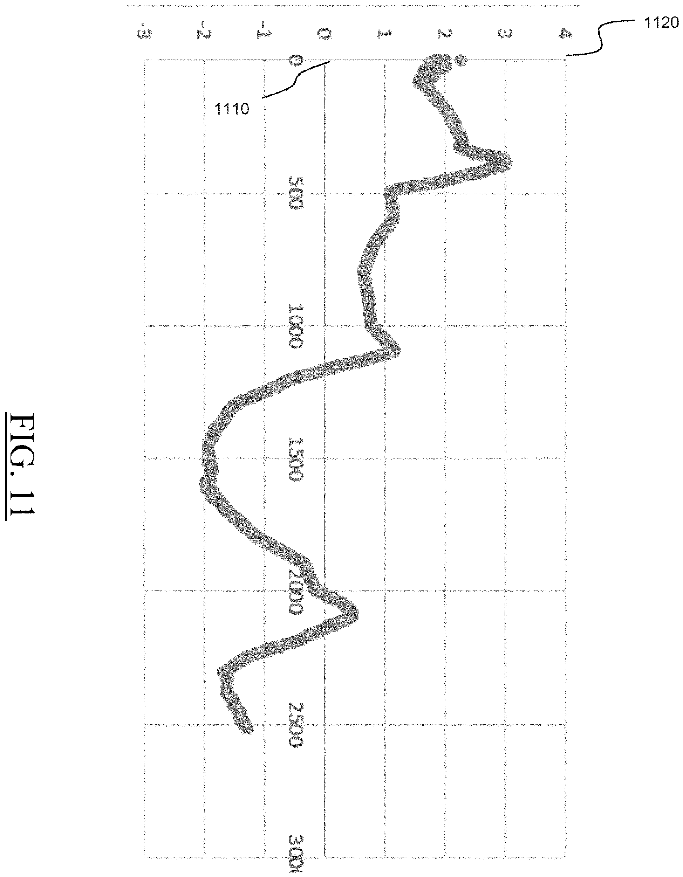

FIG.s 10 and 11 show a comparison between the reference pitch angle of GNSS and the pitching angle corrected from IMU with the correction parameters estimated are kept constant for periods of 10 seconds. FIG. 10 shows the reference pitch angle from the GNSS signal. The axis 1010 shows the distance travelled by the vehicle. The axis 1020 shows the pitch angle from the GNSS in degrees. FIG. 11 shows the pitch angle obtained by integrating the corrected pitching rate from the IMU where the correction parameters *a* and *b* are constant for periods of 10 seconds. The axis 1110 shows the distance travelled by the vehicle. The axis 1120 shows the pitch angle corrected from the IMU by the method in degrees. The plots shown in FIG.s 10 and 11 are still close to each other, thereby showing an improved estimation of vehicle altitude at Dead Reckoning.

## Claims

1. A computer-implemented method for determination of the altitude of a moving vehicle based on GNSS data and vehicle sensor data, the method comprising, in real-time:

   - obtaining:

     ◦ a sensor vehicle pitch rate stemming from at least one vehicle sensor; and
     ◦ while the GNSS signal is available, a GNSS vehicle pitch rate that stems from GNSS data of an altitude of the vehicle; and

   - calibrating the sensor vehicle pitch rate based on the GNSS vehicle pitch rate, the calibration being based on formulating the GNSS vehicle pitch rate as an affine function of the sensor vehicle pitch rate.

2. The method of claim 1, wherein the calibration is based on the equation:

$$Pitch_{Rate_{GNSS}} = a \times Pitch_{Rate_{IMU}} + b,$$

   where $Pitch_{Rate_{GNSS}}$ is the GNSS vehicle pitch rate, $Pitch_{Rate_{IMU}}$ is the sensor vehicle pitch rate, *a* is a scaling correction, and b is an offset correction.

3. The method of claim 2, wherein calibrating the sensor vehicle pitch rate comprises computing the scaling correction *a* and the offset correction *b*.

4. The method of claim 3, wherein the computation of the scaling correction *a* and the offset correction b is based on the following equations:

$$a = \frac{Pitch_{Rate_{GNSS}}(t) - Pitch_{Rate_{GNSS}}(t-1)}{Pitch_{Rate_{IMU}}(t) - Pitch_{Rate_{IMU}}(t-1)},$$

$$b = Pitch_{Rate_{GNSS}}(t)$$

$$- \left[\frac{Pitch_{Rate_{GNSS}}(t) - Pitch_{Rate_{GNSS}}(t-1)}{Pitch_{Rate_{IMU}}(t) - Pitch_{Rate_{IMU}}(t-1)}\right] \times Pitch_{Rate_{IMU}}(t),$$

where *t* is a current time step and *t* - 1 a previous time step.

5. The method of any one of claims 1 to 4, wherein the at least one vehicle sensor comprises an Inertial Measurement Unit (IMU).

6. The method of any one of claims 1 to 5, wherein the method further comprises:

   - when the GNSS signal is lost, determining an altitude of the vehicle using the last vehicle altitude obtained from the GNSS data and the calibrated sensor pitch rate.

7. The method of any one of claims 1 to 6, wherein the GNSS data stems from a GNSS device that comprises only one antenna.

8. The method of any one of claims 1 to 7, wherein the vehicle is a motorbike, a car, a bus or a truck.

9. A computer program comprising instructions which, when executed by a computer system, cause the system to perform the method of any one of claims 1 to 8.

10. A computer-readable data storage medium having recorded thereon the computer program of claim 9.

11. A system comprising a processor coupled to a memory, the memory having recorded thereon the computer program of claim 9.

12. The system of claim 11, wherein the system is coupled with or further comprises the GNSS and the at least one vehicle sensor.

13. The system of claim 12, wherein the at least one vehicle sensor includes an Inertial Measurement Unit (IMU).

14. A vehicle equipped with the system according to any one of claims 11 to 13.

FIG. 1

FIG. 2

**FIG. 3**

FIG. 4

FIG. 5

FIG. 6

FIG. 7

FIG. 8

EP 4 451 016 A1

FIG. 9

FIG. 10

EP 4 451 016 A1

# FIG. 11

Europäisches
Patentamt

European
Patent Office

Office européen
des brevets

# EUROPEAN SEARCH REPORT

Application Number

EP 23 16 9046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/053834 A1 (LOOMIS PETER VAN WYCK [US]) 1 March 2012 (2012-03-01)<br>* paragraph [0002] *<br>* paragraph [0009] – paragraph [0042] *<br>* figures 1-5 *<br>----- | 1-14 | INV.<br>G01S19/42<br>G01S19/49<br>G01S19/53<br>G01C21/16 |
| X | KR 102 388 126 B1 (SYNEREX INC [KR]) 19 April 2022 (2022-04-19)<br>* abstract *<br>* paragraph [0001] – paragraph [0051] *<br>* figures 1-5 *<br>----- | 1-14 | ADD.<br>G01S19/50<br>G01S19/14 |
| A | US 2008/269988 A1 (FELLER WALTER J [CA] ET AL) 30 October 2008 (2008-10-30)<br>* paragraph [0006] *<br>* paragraph [0023] – paragraph [0074] *<br>* figures 1-10 *<br>----- | 1-14 | |

TECHNICAL FIELDS
SEARCHED      (IPC)

G01S
G01C

The present search report has been drawn up for all claims

| Place of search | Date of completion of the search | Examiner |
|---|---|---|
| Munich | 6 October 2023 | Patrovsky, Andreas |

EPO FORM 1503 03.82 (P04C01)

## EP 4 451 016 A1

### ANNEX TO THE EUROPEAN SEARCH REPORT
### ON EUROPEAN PATENT APPLICATION NO.

EP 23 16 9046

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2023

| Patent document cited in search report | | Publication date | Patent family member(s) | | Publication date |
|---|---|---|---|---|---|
| US 2012053834 | A1 | 01-03-2012 | NONE | | |
| KR 102388126 | B1 | 19-04-2022 | NONE | | |
| US 2008269988 | A1 | 30-10-2008 | AU | 2009268726 A1 | 14-01-2010 |
| | | | BR | PI0915864 A2 | 10-11-2015 |
| | | | CA | 2730403 A1 | 14-01-2010 |
| | | | US | 2008269988 A1 | 30-10-2008 |
| | | | WO | 2010005945 A1 | 14-01-2010 |

EPO FORM P0459

For more details about this annex : see Official Journal of the European Patent Office, No. 12/82